# EUROPÄISCHE PATENTSCHRIFT

(11) **EP 0 691 721 B1**
(45) Veröffentlichungstag und Bekanntmachung des Hinweises auf die Patenterteilung: **19.08.1998**
(21) Anmeldenummer: 95109917.5
(22) Anmeldetag: 26.06.1995
(51) Int. Cl.: H02G 15/184, H01R 13/53

(54) **Steckendverschluss**
Connector termination
Terminaison de connecteur

(30) Priorität: 08.07.1994 DE 4424072
(43) Veröffentlichungstag der Anmeldung: 10.01.1996
(73) Patentinhaber: ALCATEL ALSTHOM COMPAGNIE GENERALE D'ELECTRICITE, 75008 Paris (FR)
(72) Erfinder: Baesch, Manfred, D-46049 Oberhausen (DE)
(74) Vertreter: Mende, Eberhard, Dipl.-Ing.

(56) Entgegenhaltungen:
- EP-A- 0 504 035
- DE-A- 3 511 095
- DE-A- 3 607 441
- DE-A- 3 615 597
- FR-A- 2 557 390
- Abschlu - und Verbindingstechnik bei Starkstromkabeln, H. Klockhaus u. G. Wanser, Seiten 84 u. 85, 1979 ; Verlags- u. Wirtschaftsgesellschaft der Elektrizitätswerke Stresemannallee 23, 6000 Frankfurt/Main 70
- Kabelhandbuch, 3. Ausgabe, 1979 ; Vereinigung Deutscher Elektrizitätswerke ; Verlags- u. Wirtschaftsgesellschatf der Elektrizitätswerke Stresemannallee23, 6000 Frankfurt/Main 70

## Beschreibung

Die Erfindung geht aus von einem Steckendverschluß zum Anschluß eines geschirmten Starkstromkabels an ein elektrisches Gerät, der einen vorgefertigten, T-förmigen ersten Isolierkörper aus einem elastischen Material, eine zum Umgeben eines Kabel schuhs geeignete, in den ersten Isolierkörper eingebettete Schirmelektrode sowie ein Feldsteuerelement aufweist.

Zum Anschließen von geschirmten Starkstromkabeln an elektrische Geräte wie z. B. an einen Transformator oder an eine Schaltanlage ist aus der DE-A-36 07 441 ein Steckendverschluß mit einem vorgefertigten, T-förmigen Isolierkörper bekannt, der einerseits zur Aufnahme eines entsprechend vorbereiteten Kabelendes und andererseits zum Aufstecken auf einen Durchführungsisolator des elektrischen Gerätes ausgebildet ist. Der aus einem elastischen Material ausgebildete Isolierkörper weist eine einen Kabelschuh umgebende Schirmelektrode sowie ein Feldsteuerelement auf. Für verschiedene Kabelquerschnitte sind unterschiedliche vorgefertigte Isolierkörper mit entsprechenden Abmessungen erforderlich, so daß eine große Anzahl von Isolierkörpern verschiedener Größe auf Lager gehalten werden muß.

Die DE-A-36 15 597 betrifft ein Anschlußelement für Mittelspannungskabel, das einen als Aufschiebeelement ausgebildeten, T-förmigen Isolierkörper aufweist. Dieser vorgefertigte Isolierkörper ist unter Vorspannung stehend auf das mit einem einen Feldsteuertrichter enthaltenden Feldsteuerkörper versehene Kabelende aufgeschoben.

Im Handel sind bereits seit einiger Zeit Kaltschrumpf-Verbindungsmuffen erhältlich, die im vorgedehnten Zustand z. B. auf einer Stützwendel gehalten werden. Bei der Montage der Verbindungsmuffe wird diese Stützwendel herausgezogen, wobei sich das Material der Verbindungsmuffe entspannt und mit einem bleibenden, radialen Anpreßdruck auf das Kabel aufschrumpft.

Aus der EP-A-0 504 035 ist ein Steckendverschluß für elektrische Kabel bekannt, der einen aus einer inneren leitfähigen Schicht, einer mittleren Isolierschicht und einer äußeren leitfähigen Schicht bestehenden Muffenkörper aufweist. Die äußere leitfähige Schicht des Muffenkörpers wird in ihrem dem elektrischen Steckkontakt abgewandten Bereich werkseitig mittels einer entfernbaren rohrförmigen Stützwendel im aufgeweiteten Zustand gehalten. Bei der Montage wird diese Stützwendel herausgezogen, so daß die äußere leitfähige Schicht des Muffenkörpers mit bleibendem Anpreßdruck auf das Kabel aufschrumpft.

Ausgehend von dem aus der DE-A-36 07 441 bekannten Steckendverschluß liegt der Erfindung das Problem zugrunde, die erforderliche Lagerhaltung von Steckendverschlüssen für die verschiedenen Kabelquerschnitte zu begrenzen sowie dabei eine einfache Montage des Steckendverschlusses zu gewährleisten.

Dieses Problem wird durch die kennzeichnenden Merkmale das Patentanspruchs 1 gelöst, indem das Feldsteuerelement in einem zum Umschließen eines abgesetzten Kabelendes geeigneten, vorgefertigten zweiten Isolierkörper aus einem elastischen Material eingebettet ist und der erste Isolierkörper als Kaltschrumpfteil ausgebildet und zum Aufschrumpfen auf den zweiten Isolierkörper geeignet ist.

Die durch die Erfindung erzielbaren Vorteile bestehen insbesondere darin, daß auf einfache Art und Weise ein Steckendverschluß mit einem vorgefertigten ersten Isolierkörper für einen großen Bereich verschiedener Kabelquerschnitte verwendet werden kann. Auf diese Weise läßt sich die Lagerhaltung von Steckendverschlüssen für die verschiedenen Kabelquerschnitte auf ein Minimum begrenzen, was zu einer wesentlichen Kosteneinsparung und gegebenenfalls zu einer kürzeren Lieferzeit führt. Der erfindungsgemäße Steckendverschluß ist zudem durch die Verwendung des kaltschrumpfenden ersten Isolierkörpers und des das Feldsteuerelement aufweisenden vorgefertigen zweiten Isolierkörpers auf besonders einfache Art und Weise durch einfaches Aufschieben montierbar. Durch den bleibenden, radialen Anpreßdruck des ersten Isolierkörpers auf den zweiten Isolierkörper wird ein dichter elektrischer Anschluß geschaffen, bei dem das Eindringen von Fremdkörpern und Flüssigkeiten wie Wasser oder Öl an dieser Stelle vermieden ist.

Durch die in den Unteransprüchen aufgeführten Merkmale sind vorteilhafte Weiterbildungen und Verbesserungen der Erfindung möglich.

Um ebenfalls die Lagerhaltung des das Feldsteuerelement aufweisenden zweiten Isolierkörpers für die verschiedenen Kabelquerschnitte zu vereinfachen, ist es von Vorteil, wenn auch der zweite Isolierkörper als Kaltschrumpfteil ausgebildet und zum Aufschrumpfen auf das abgesetzte Kabelende geeignet ist.

Es ist vorteilhaft, wenn der erste Isolierkörper an seinem Umfang mit einer leitfähigen Schicht versehen ist, so daß der Steckendverschluß im Betrieb berührungssicher ist.

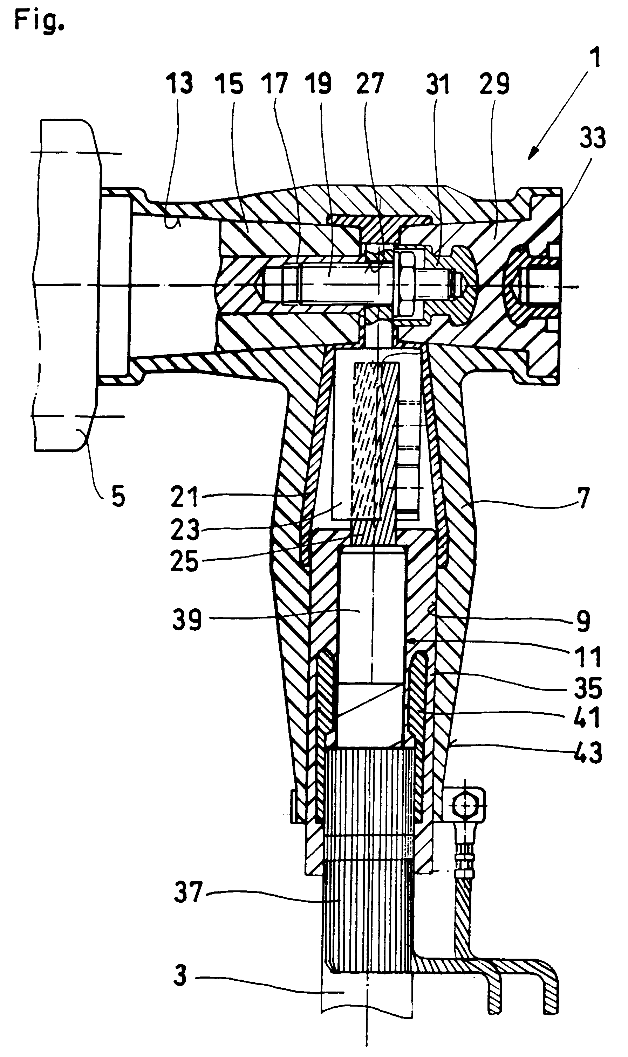

Ein Ausführungsbeispiel der Erfindung ist in der Zeichnung vereinfacht dargestellt und in der nachfolgenden Beschreibung näher erläutert.

Der in der Fig. beispielhaft dargestellte Steckendverschluß 1 zum Anschluß eines geschirmten Starkstromkabels 3 an ein elektrisches Gerät 5 weist einen vorgefertigten, T-förmigen ersten Isolierkörper 7 aus einem elastischen Material wie z. B. einem Silikonkautschuk oder einem EPDM (Ethylen/Propylen-Dien-Terpolymer) auf. An seinem Umfang ist der erste Isolierkörper 7 beispielsweise mit einer äußeren leitfähigen Schicht 43 versehen, damit der Steckendverschluß 1 auch bei an dem Starkstromkabel 3 anliegender Spannung berührungssicher ist. Der erste Isolierkörper 7 hat ein Sackloch 9, in dessen eines Ende das Starkstromkabel 3 mit seinem abgesetzten Kabelende 11 ragt, sowie eine senkrecht dazu verlaufende Durchgangsbohrung 13, die mit dem Sackloch 9 an dessen anderem Ende in Verbindung steht und die zur Aufnahme eines Durchführungsisolators 15 des elektrischen Gerätes 5 zum elektrischen Anschluß des Starkstromkabels an das elektrische Gerät dient. Der Durchführungsisolator 15 hat z. B. ein zentrales Kontaktstück 17, in das eine Kontaktschraube 19 mit ihrem einen Ende eingeschraubt ist.

Der erste Isolierkörper 7 weist eine Schirmelektrode 21 auf, die einen Teil der Wandung des Sackloches 9 bildet. Die Schirmelektrode 21 umgibt einen Kabelschuh 23, der mit einem elektrischen Leiter 25 des Starkstromkabels 3 an dessen abgesetzten Kabelende 11 beispielsweise durch eine Schraub-, Preß- oder Lötverbindung fest verbunden ist. An seinem anderen Ende hat der Kabelschuh 23 eine Anschlußbohrung 27, die von der Kontaktschraube 19 durchragt wird. Auf diese Weise ist der Kabelschuh 23 mittels der Kontaktschraube 19 am Kontaktstück 17 des Durchführungsisolators 15 des elektrischen Gerätes 5 fixiert, wobei ein elektrischer Anschluß des Starkstromkabels 3 an das elektrische Gerät hergestellt wird.

An ihrem dem Durchführungsisolator 15 abgewandten Ende ist die Durchgangsbohrung 13 beispielsweise von einem Isolierstopfen 29 verschlossen, in dem eine erste Gewindebuchse 31 eingebettet ist. In diese erste Gewindebuchse 31 ist die Kontaktschraube 19 mit ihrem dem Kontaktstück 17 abgewandten Ende eingeschraubt. An seinem der ersten Gewindebuchse 31 abgewandten Ende ist im Isolierstopfen 29 bzw. eine zweite Gewindebuchse 33 vorgesehen, die zur Befestigung einer nicht dargestellten deckelartigen Kappe mittels einer Schraube an dem Steckendverschluß 1 dient.

Unmittelbar auf dem abgesetzten Kabelende 11 des Starkstromkabels 3 ist ein zweiter Isolierkörper 35 angeordnet, der das abgesetzte Kabelende in axialer Richtung beispielsweise von einem elektrischen Schirm 37 über eine Kabelisolierung 39 bis hin zum elektrischen Leiter 25 nahe des Kabelschuhs 23 umgibt. In dem zweiten Isolierkörper 35 ist ein Feldsteuerelement 41 eingebettet, das mit dem elektrischen Schirm 37 des Starkstromkabels 3 in elektrisch leitendem Kontakt steht. Der zweite Isolierkörper 35 ist beispielsweise fast über seine gesamte axiale Länge von dem ersten Isolierkörper 7 umschlossen; er kann aber auch über seine gesamte axiale Länge von dem ersten Isolierkörper umschlossen sein.

Der erste Isolierkörper 7 und bei dem dargestellten Ausführungsbeispiel beispielsweise auch der zweite Isolierkörper 35 sind als Kaltschrumpfteile ausgebildet, die bei der Montage im vorgedehnten Zustand beispielweise auf einer Stützwendel über das Starkstromkabel 3 aufgeschoben werden. Durch das Herausziehen der Stützwendel entspannt sich das Material, so daß der zweite Isolierkörper 35 mit einem bleibenden, radialen Anpreßdruck auf das abgesetzte Kabelende 11 aufschrumpft. Daran anschließend schrumpft der erste Isolierkörper 7 durch das Herausziehen seiner Stützwendel in axialer Richtung zumindest teilweise mit einem bleibenden, radialen Anpreßdruck auf den zweiten Isolierkörper 35 auf und wird auf diese Weise fest an dem Kabelende 11 gehalten.

Der elektrische Schirm 37 sowie die am Umfang des ersten Isolierkörpers 7 ausgebildete äußere leitfähige Schicht 43 sind beispielsweise jeweils mit einem Erdungsanschluß versehen.

## Patentansprüche

1. Steckendverschluß (1) zum Anschluß eines geschirmten Starkstromkabels (3) an ein elektrisches Gerät (5), der einen vorgefertigten, T-förmigen ersten Isolierkörper (7) aus einem elastischen Material, eine zum Umgeben eines Kabelschuhs (23) geeignete, in den ersten Isolierkörper (7) eingebettete Schirmelektrode (21) sowie ein Feldsteuerelement (41) aufweist, dadurch gekennzeichnet, daß das Feldsteuerelement (41) in einem zum Umschließen eines abgesetzten Kabelendes (11) geeigneten, vorgefertigten zweiten Isolierkörper (35) aus einem elastischen Material eingebettet ist und daß der erste Isolierkörper (7) als Kaltschrumpfteil ausgebildet und zum Aufschrumpfen auf den zweiten Isolierkörper (35) geeignet ist.

2. Steckendverschluß (1) nach Anspruch 1, dadurch gekennzeichnet, daß der zweite Isolierkörper (35) als Kaltschrumpfteil ausgebildet und zum Aufschrumpfen auf das abgesetzte Kabelende (11) geeignet ist.

3. Steckendverschluß (1) nach Anspruch 1 oder 2, dadurch gekennzeichnet, daß der erste Isolierkörper (7) an seinem Umfang mit einer leitfähigen Schicht (43) versehen ist.

## Claims

1. Plug-in entrance fitting (1) for connecting a shielded power cable (3) to an electrical appliance (5), comprising a prefabricated, T-shaped first insulating body (7) made of an elastic material, a shielding electrode (21), which is suitable for surrounding a cable lug (23) and embedded in the first insulating body (7), as well as a field control element (41), characterized in that the field control element (41) is embedded in a prefabricated second insulating body (35) made of an elastic material, which is suitable for enclosing a bared cable end (11), and that the first insulating body (7) takes the form of a cold-shrinkable part and is suitable for shrinking onto the second insulating body (35).

2. Plug-in entrance fitting (1) according to claim 1, characterized in that the second insulating body (35) takes the form of a cold-shrinkable part and is suitable for shrinking onto the bared cable end (11).

3. Plug-in entrance fitting (1) according to claim 1 or 2, characterized in that the first insulating body (7) is provided at its periphery with a conductive layer (43).

## Revendications

1. Connexion terminale à enficher (1) destinée au raccordement d'un câble courant fort (3) blindé sur un appareil électrique (5) présentant un premier corps isolant (7) préfabriqué, en forme de T, en matériau élastique, une électrode de blindage (21) logée dans le premier corps isolant (7) de forme appropriée à envelopper une cosse de câble (23), ainsi qu'un élément de commande de champ (41), caractérisée par le fait que l'élément de commande de champ (41) est logé dans un deuxième corps isolant (35) préfabriqué, en matériau élastique de forme appropriée à entourer la terminaison d'un câble de forme épaulée (11) et par le fait que le premier corps isolant (7) est formé par une pièce capable de se rétracter à froid et prévu pour enserrer le deuxième corps isolant (35).

2. Connexion terminale à enficher (1) selon la revendication 1, caractérisée par le fait que le deuxième corps isolant (35) est formé par une pièce capable de se rétracter à froid et prévu pour enserrer la terminaison du câble de forme épaulée (11).

3. Connexion terminale à enficher (1) selon les revendications 1 ou 2 caractérisée par le fait que le premier corps isolant (7) est pourvu sur sa périphérie d'une couche conductrice (43).
